# EUROPEAN PATENT APPLICATION

(11) **EP 4 647 775 A1**
(43) Date of publication of application: **12.11.2025**
(21) Application number: 25170596.8
(22) Date of filing: 15.04.2025
(51) Int. Cl.: G01P 5/26, G01P 13/02, G01S 17/58, B64D 43/02

(54) **TECHNIQUES FOR IMPROVING SIGNAL TO NOISE RATIO OF AN OPTICAL AIR-DATA SYSTEM**

(30) Priority: 09.05.2024 US 202463644858 P; 22.01.2025 US 202519034078
(71) Applicant: Honeywell International Inc., Charlotte, NC 28202 (US)
(72) Inventor: GAO, Kaizhong, Charlotte, 28202 (US)
(74) Representative: Haseltine Lake Kempner LLP

(57) **Abstract**

Techniques are provided which improve the signal to noise ratio of an optical air data system. A pulsed optical signal is sequentially provided to different optical emitters. Upon receiving the pulsed optical signal, each optical emitter emits an optical beam along a unique line of sight to a unique region of the atmosphere. A return optical signal is reflected and/or scattered back to an optical receiver. The return optical signal is detected to provide data about the return optical signal. Using data about the pulsed optical signal and each return optical signal, optical air data parameters can be derived with improved accuracy and/or sensitivity.

## Description

### CROSS-REFERENCE TO RELATED APPLICATIONS

The present application claims benefit of U.S. Patent Application Serial No. 63/644,858 filed May 9, 2024; the entire contents of the aforementioned patent application are incorporated herein by reference as if set forth in its entirety.

### BACKGROUND

An Optical Air Data system (OADS) is proposed as a supplement to or a replacement for a conventional air data system for aircraft. The OADS is configured to emit a set of two, three, four, or more transmitted optical beams. Each transmitted optical beam is emitted to a unique region of the atmosphere. A portion of each transmitted optical signal is reflected and/or scattered back to the OADS. Each such portion may be referred to as a return optical signal.

Using the return optical signals, the OADS may determine air data parameters including without limitation temperature, air density, humidity, true airspeed, angle of attack (AoA), and/or angle of sideslip (AoS).¹ An exemplary OADS is illustrated in U.S. Patent Serial No. 7,495,774 which is incorporated by reference in its entirety herein.

Conventionally a laser generates optical signal, which may be continuous wave or pulsed, whose energy is split and simultaneously provided to all LOSs.¹ True airspeed means a speed of the vehicle relative to the air through which the vehicle travels. Angle of attack means an angle between a reference line of a body of the vehicle (*e.g.*, a chord of a foil, for example, a wing) and a vector representing relative motion between the body and fluid through which the body is moving. Angle of sideslip means an angle between which a direction in which a body of a vehicle is pointing and a direction in which the body of the vehicle is actually travelling.

### SUMMARY

In some aspects, the techniques described herein relate to a method for improving a signal to noise ratio of an optical air data system, the method including: receiving a pulsed optical signal including a train of pulses; sequentially time apportioning the pulsed optical signal into at least two portions, wherein each portion includes at least one pulse; sequentially emitting at least two transmitted pulsed optical beam each of which is derived from a unique time segmented portion of the pulsed optical signal and each of which is emitted during a different time period; sequentially receiving a different return optical signal, wherein each return pulsed optical signal is derived from a unique transmitted pulsed optical beam, wherein, for each transmitted pulsed optical beam and a return optical signal derived therefrom, either a transmitted pulsed optical beam is emitted, or the return optical signal derived from the transmitted pulsed optical beam is received, along a unique line of sight to a unique region of atmosphere; receiving or expecting to receive an incident return optical signal at a camera, then disabling a shutter of the camera only for a duration of an actual or an expected reception of the incident return optical signal; and for each return optical signal, generating data with a camera's optical sensor from the incident return optical signal.

In some aspects, the techniques described herein relate to an optical air data system with improved signal to noise ratio, the optical air data system including: an optical and electronic processing circuit including at least one camera; a laser configured to emit a pulsed optical signal including a train of pulses; an optical switch coupled to the laser, and configured to receive the pulsed optical signal and to sequentially time apportion the pulsed optical signal into at least two portions, wherein each portion includes at least one pulse; at least two optical emitters configured to sequentially emit at least two transmitted pulsed optical beams each of which is derived from a unique portion of the pulsed optical signal and each of which is emitted during a different time period; at least two optical receivers each of which is optically coupled to the optical and electronic processing circuit and is configured to sequentially receive a return optical signal, wherein each return pulsed optical signal is derived from a unique transmitted pulsed optical beam; wherein the optical and electronic processing circuit is configured to disable a shutter of a camera when the camera receives or is expected to receive an incident return optical signal and only for a duration of an actual or an expected reception of the incident return optical signal; and wherein the optical and electronic processing circuit is further configured to, for each return optical signal, generate data with a camera's optical sensor from the incident return optical signal.

In some aspects, the techniques described herein relate to an apparatus, including: a vehicle; and an optical air data system mounted on and/or in the vehicle, and including: an optical and electronic processing circuit including at least one camera; a laser configured to emit a pulsed optical signal including a train of pulses; an optical switch coupled to the laser, and configured to receive the pulsed optical signal and to sequentially time apportion the pulsed optical signal into at least two portions, wherein each portion includes at least one pulse; at least two optical emitters configured to sequentially emit at least two transmitted pulsed optical beams each of which is derived from a unique portion of the pulsed optical signal and each of which is emitted during a different time period; at least two optical receivers each of which is optically coupled to the optical and electronic processing circuit and is configured to sequentially receive a return pulsed optical signal, wherein each return pulsed optical signal is derived from a unique transmitted pulsed optical beam; wherein the optical and electronic processing circuit is configured to disable a shutter of a camera when the camera receives or is expected to receive an incident return optical signal and only for a duration of an actual or an expected reception of the incident return optical signal; wherein the optical and electronic processing circuit is further configured to, for each return optical signal, generate data with a camera's optical sensor from the incident return optical signal; and wherein the optical and electronic processing circuit is further configured to, using the data generated by an optical sensor and data about the pulsed optical signal, generate at least one air data parameter.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1A illustrates a block diagram of one embodiment of a vehicle including an optical air data system implemented according to embodiments of the invention;
FIG. 1B illustrates a block diagram of one embodiment of an optical and electrical processing system;
FIG. 1C illustrates a plan view of one embodiment of the at least one camera;
FIG. 1D illustrates a cross sectional diagram of one embodiment of a camera;
FIG. 2A illustrates a diagram of one embodiment of a portion of a pulsed optical signal during a pulse train portion period;
FIG. 2B illustrates a diagram of one embodiment of one sequence of different portions of a pulsed optical signal sequentially emitted to different optical emitters and corresponding return optical signals; and
FIG. 3 illustrates a flow diagram of an exemplary method for determining enhancing the signal to noise ratio of an optical air data system.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized, and that structural, mechanical, and/or electrical changes may be made. Furthermore, each method presented in the drawing figures and the specification is not to be construed as limiting the order in which the individual steps may be performed. The following detailed description is not to be taken in a limiting sense.

A conventional OADS has an unsatisfactorily low signal-to-noise ratio (SNR) which diminishes the accuracy and/or the sensitivity of air data parameter(s) generated by the OADS, decreases spatial and temporal resolutions of the air data parameter(s), and may increase the amount of computational resources needed to compensate for diminished SNR (thus increasing cost). Embodiments of the invention provide a technological improvement to an OADS by increasing the SNR of the OADS by (a) increasing the optical power of each transmitted optical signal, and hence, each return optical signal, and (b) reducing the time average noise at the optical sensor(s) configured to convert the return optical signals to electrical signals.

Conventionally in an OADS, an optical signal is provided simultaneously to each optical emitter of the OADS. For example, if the OADS has four optical emitters, then each transmitted optical beam simultaneously has substantially one quarter of the optical power of the optical signal. In embodiments of the invention, the optical signal is time sequentially provided to one optical emitter of the OADS so that only one transmitted optical beam is emitted at any time. The one transmitted optical beam has respectively substantially all of the optical power of the optical signal. To reduce time-averaged noise of the optical sensor(s), each optical sensor is enabled, *e.g*., electronically or mechanically, for example, with a shutter, to detect incident optical energy only around a time when a return optical signal is expected to be received by the optical sensor. As a result, an OADS utilizing embodiments of the invention has improved resolution, accuracy and/or sensitivity of air data parameter(s) generated by the OADS, improved spatial and temporal resolutions of the air data parameter(s), and may utilize a lesser amount of computational resources which reduces cost.

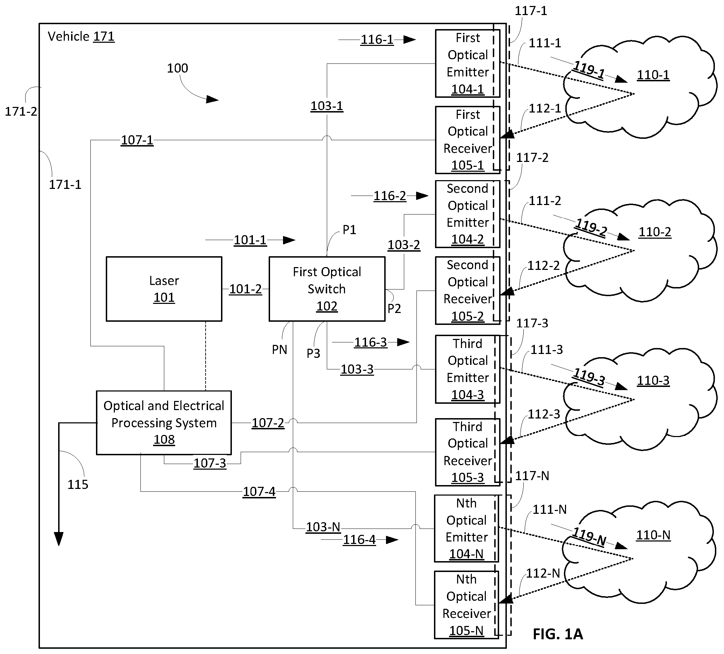

FIG. 1A illustrates a block diagram of one embodiment of a vehicle 171 including an OADS 100 implemented according to embodiments of the invention. Optionally, the vehicle 171 is an airborne vehicle such as an aircraft; however, the vehicle 171 may be another type of vehicle. The vehicle 171 has a body 171-1.

The OADS 100 includes an optical processing system (or optical processing circuitry) 108, a laser 101, a first optical switch 102, and N pairs of an optical emitter 104-1, 104-2, 104-3, 104-N and an optical receiver 105-1, 105-2, 105-3, 105-N. N is an integer greater than one, *e.g.,* two, three, four, or more. The first optical switch 102 may be a mechanical optical switch, a micro-optical-electro-mechanical switch (*e.g.*, using micromirrors for example as in digital light processing technology), Electro-Optic Modulators (EOMs) or any other type of optical switch. The first optical switch 102 includes N output ports.

For pedagogical purposes, the OADS 100 illustrated in FIG. 1A includes four pairs of optical emitters and optical receivers. Thus, the first optical switch 102 is illustrated in FIG. 1A is shown as having four output ports.

The laser 101 is configured to emit a pulsed optical signal 101-1. The laser 101 is optically coupled to the first optical switch 102 which is configured to receive the pulsed optical signal 101-1. The optical signal 101-1 is conveyed by a laser optical waveguide 101-2 from the laser 101 to the first optical switch 102.

The first optical switch 102 is configured to transmit, *e.g*., periodically, a unique time segmented portion 116-1, 116-2, 116-3, 116-4 (during a unique time period) of the optical signal 101-1 to an optical emitter 104-1, 104-2, 104-3, 104-N. Thus, each sequential transmitted unite time segmented portion is emitted sequentially from a differ port P1, P2, P3, PN of the first optical switch 102. Each unique time segmented portion 116-1, 116-2, 116-3, 116-4 includes one or more optical pulses of the pulsed optical signal 101-1. Each optical emitter 104-1, 104-2, 104-3, 104-N is configured to receive, *e.g*., periodically, a unique time segmented portion 116-1, 116-2, 116-3, 116-4 of the pulsed optical signal 101-1, and to transmit a transmitted optical beam derived from the unique time segmented portion 116-1, 116-2, 116-3, 116-4 of the pulsed optical signal 101-1. Each unique time segment is a unique time period.

FIG. 1A illustrates N sets of optical emitters each of which includes one optical emitter; each optical emitter 104-1, 104-2, 104-3, 104-N is optically coupled by a unique emitter optical waveguide 103-1, 103-2, 103-3, 103-N to a unique output port P1, P2, P3, PN of the first optical switch 102. Each optical emitter 104-1, 104-2, 104-3, 104-N includes at least one optical waveguide, at least one lens, at least one mirror, at least one filter, and/or an optical window. Each optical receiver 105-1, 105-2, 105-3, 105-N includes at least one optical waveguide, at least one lens, at least one mirror, at least one filter, and/or an optical window. Optionally, one or more of the optical waveguides described herein include an optical fiber and/or a planar optical waveguide.

Using a time segmented portion of the pulsed optical signal, each optical emitter 104-1, 104-2, 104-3, 104-N is configured to sequentially emit a unique or different transmitted optical beam (or transmitted pulsed optical beam) 111-1, 111-2, 111-3, 111-N towards a unique or different region of atmosphere 110-1, 110-2, 110-3, 110-N. A portion 112-1, 112-2, 112-3, 112-N of each transmitted optical beam 111-1, 111-2, 111-3, 111-N is reflected and/or scattered back from the unique or different region of atmosphere 110-1, 110-2, 110-3, 110-N to a corresponding optical receiver 105-1, 105-2, 105-3, 105-N; the portion of the transmitted optical beam that is reflected and/or scattered may be referred herein as a return optical signal (or a return pulsed optical signal) 112-1, 112-2, 112-3, 112-N. For each transmitted pulsed optical beam 111-1, 111-2, 111-3, 111-N, a transmitted pulsed optical beam is emitted, or a return optical signal (derived from the transmitted pulsed optical beam) is received, along a unique line of sight (LOS) to a unique region of the atmosphere; for pedagogical purposes, FIG. 1A illustrates each transmitted pulsed optical beam 111-1, 111-2, 111-3, 111-N is emitted along a unique line of sight (LOS) 119-1, 119-2, 119-3, 119-N. Optionally, the corresponding optical receiver 105-1, 105-2, 105-3, 105-N which receives a return optical signal 112-1, 112-2, 112-3, 112-N is adjacent to the optical emitter 104-1, 104-2, 104-3, 104-N that transmitted the emitted the transmitted optical beam 111-1, 111-2, 111-3, 111-N from which the return optical signal 112-1, 112-2, 112-3, 112-N is derived.

Optionally, one or more pairs are in an optical head 117-1, 117-2, 117-3, 117-N configured to be mounted on and/or in the surface 171-2 of the body 171-1. Each pair includes an optical receiver adjacent to an optical transmitter. For pedagogical purposes, each pair of an optical receiver and an optical transmitter are illustrated in FIG. 1A as being mounted in a unique optical head 117-1, 117-2, 117-3, 117-N. Optionally, two or more such pairs can be mounted in one unique optical head.

Each return optical signal 112-1, 112-2, 112-3, 112-N received by an optical emitter is optically coupled through a unique optical waveguide 107-1, 107-2, 107-3, 107-4 to an optical and electrical processing system (or optical and electrical processing circuitry) 108. The optical and electrical processing system 108 is configured to diminish optical noise in each return optical signal, amplify each return optical signal, convert each return optical signal 112-1, 112-2, 112-3, 112-N to a corresponding analog or digital electrical signal using at least one optical sensor, convert each analog electrical signal into a digital electrical signal and/or to generate at least one air data parameter 115 from using information, including derived from each electrical signal, about each pair of a transmitted optical beam and return optical signal derived from the transmitted optical beam. Optionally, information about the return optical signal may be derived from an electrical signal derived from a return optical signal. Optionally, the optical and electrical processing system 108 is coupled to the laser 101 from which the optical processing system 108 may obtain data about the transmitted optical beam.

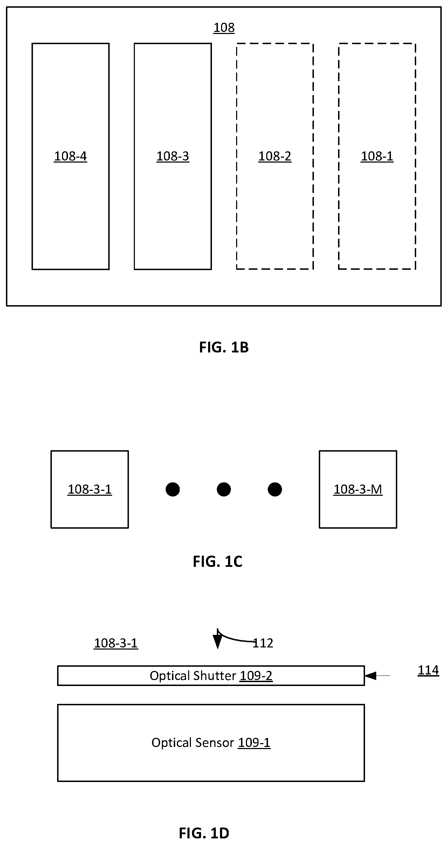

FIG. 1B illustrates a block diagram of one embodiment of an optical and electrical processing system 108. The illustrated optical and electrical processing system 108 includes at least one camera 108-3 and an electronic processing system (or electronic processing circuitry) 108-4. Optionally, the optical and electrical processing system 108 also includes an optical signal combiner 108-1 and/or an interferometer 108-2, *e.g.,* a Fabry-Perot interferometer. Optionally, the interferometer includes different optical filters. Optionally, the optical signal combiner 108-1 is a second optical switch, an optical coupler, or any other type of optical signal combiner. The optional optical signal combiner 108-1 is configured to receive N return optical signals at different inputs at different times, to time sequentially the N return optical signals, and at a single optical output to provide the time sequentially combined N return optical signals. Time sequentially combining means combining each return optical signal in a time order at which each return optical signal is received, *e.g.,* by an optical signal combiner 108-1. Optionally, the optical and electrical processing system 108 may include other components, such as optical waveguide, optical mirrors, optical lenses, and/or optical filters.

Each of the at least one camera 108-3 includes an optical sensor and a shutter. The shutter may be an electronic or a mechanical shutter. An electronic shutter of a camera is closed by electrically disabling an optical sensor of the camera and is opened by electrically enabling the optical sensor of the camera; as a result, the optical sensor of the camera does not sense the return optical signal. The electronic shutter may be opened by electrically enabling the optical sensor so that the optical sensor detects the return optical signal. Alternatively, the electronic shutter may be implemented with electrochromatic material described elsewhere herein. A mechanical shutter of a camera is closed by mechanically positioning an optically opaque, *i.e.,* non-light transmissive, curtain over the optical sensor of the camera; as a result, the optical sensor cannot sense any optical signal.

FIG. 1C illustrates a plan view of one embodiment of the at least one camera 108-3. The at least one camera 108-3 includes M cameras 108-3-1, 108-3-M. M is an integer greater than zero. Each camera 108-3-1, 108-3-M may utilize an electronic or a mechanical shutter. When only one camera is utilized in the optical and electronic processing system 108, *i.e.,* when M equals one, then each return optical signal is received, at different time periods, by the one camera and its optical sensor. Alternatively, more than one camera may be used, *i.e.,* when M is greater than one, so that at least two different return optical from two different optical receivers are received at different time periods by different cameras, and thus different optical sensors.

A linear disposition of the N optical sensors 108-3-1, 108-3-M is shown only for pedagogical purposes. The N optical sensors 108-3-1, 108-3-M may be disposed in any other pattern, *e.g.,* a rectangular pattern.

FIG. 1D illustrates a cross-sectional diagram of one embodiment of a camera 108-3-1. For pedagogical purposes, the camera 108-3-1 is illustrated as including an optical sensor 109-1 and a shutter 109-2. An optical return signal 112 is projected towards the optical sensor 109-1, and may not be either incident upon or detected by the optical sensor 109-1 if the shutter is enabled. Optionally, the shutter 109-2 of a camera is the controlled by control signal(s) 114 transmitted from the electronic processing system 108-4. The optical sensor of each camera may be implemented with a charge coupled device, a complementary metal oxide semiconductor sensor, a plurality of photomultiplier tubes (PtubeMTs), or any other type of optical sensor.

The shutter 109-2 may be optically opaque material configured to be moved, *e.g*., electrically and/or mechanically, over the optical sensor 109-1 to block incident light from reaching the optical sensor 109-1 when the optical sensor 109-1 is not receiving or expected to receive a return optical signal. Optionally, the shutter can be implemented with electrochromic material, *e.g*., electrochromic glass, which can be electrically controlled, *e.g*., using the control signal(s) 114 to be either optically opaque or optically clear. When opaque, the optical sensor cannot sense any optical signal. When clear, the optical sensor can detect an optical signal, *e.g.,* a return optical signal.

Optionally and for each camera, during time periods when a return optical signal is not optically received (or expected to be received) by a camera, then the camera is disabled by activating the electronic or mechanical shutter. Thus, optionally and for each camera, a camera is enabled when the return optical signal is optically received (or expected to be received) by the camera. Optionally, such enablement and disablement can be facilitated for each camera by estimating, *e.g*., with the optical and electronic processing system 108, *e.g.,* the electronic processing system 108-4, when return optical signal(s) are expected to be incident upon on a camera. However, such enablement and disablement can be implemented in other ways. Optionally and without limitation, the optical receiver which receives the return optical signal may optionally include another optical sensor (for example similar to those described herein) and may be configured to provide the optional control signal(s) by which the optical sensor is enabled and disabled.

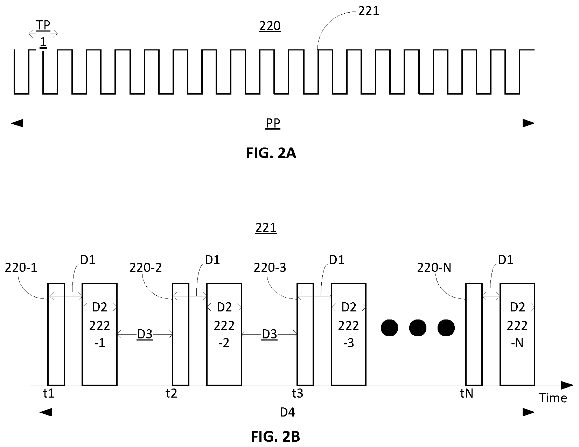

FIG. 2A illustrates a diagram of one embodiment of a portion 221 of a pulsed optical signal 220 during a pulse train portion period PP. The portion 221 of a pulsed optical signal 220 includes a train of pulse(s) including one or more pulses each of which has a pulse period TP1. For pedagogical purposes, the portion 221 of a pulsed optical signal 220 illustrated in FIG. 2A includes 18 pulses. Although each pulse illustrated in FIG. 2A is shown to have a zero rise time and a zero fall time for pedagogical purposes, the rise time and the fall time may each be non-zero.

FIG. 2B illustrates a diagram of one embodiment of one sequence 221 of different portions of a pulsed optical signal sequentially emitted to different optical emitters and corresponding return optical signals. The first optical switch 102 sequentially emits a different portion, of N time segmented portions 220-1, 220-2, 220-3, 220-N of the pulsed optical signal 101-1, to each of the N optical emitters 104-1, 104-2, 104-3, 104-N.

The first time segmented portion 220-1 is emitted from the first port P1 of the first optical switch 102 starting at a first time t1. The second time segmented portion 220-2 is emitted from the second port P2 of the first optical switch 102 starting at a second time t2. The third time segmented portion 220-3 is emitted from the third port P3 of the first optical switch 102 starting at a third time t3. The Nth time segmented portion 220-N is emitted from the Nth port PN of the first optical switch 102 starting at an Nth time tN, where t1 < t2 < t3 < tN.

Each of the N time segmented portions 220-1, 220-2, 220-3, 220-N of the pulsed optical signal 101-1 is emitted as a transmitted optical beam by the optical emitter which receives the portion. When a portion of the pulsed optical signal is emitted by the first optical switch 102, then after at least a first time period D1, the return optical signal derived from the transmitted optical beam is received by the optical emitter associated with the optical transmitter. Optionally, D1 is substantially equal to a time for the emitted optical beam to propagate from its optical source, *e.g.*, a laser, to a region of interest from an optical emitter, and for a return optical signal to travel from the region of interest to an optical receiver; thus, optionally, D1 includes the width of a corresponding time segmented portion. At the end of the first time period D1, the camera which receives the received optical signal has its shutter disabled during a shutter disablement time period 222-1, 222-2, 222-3, 222-N which lasts for a second time period D2. When a shutter of a camera is disabled during a shutter disablement time period, the shutter of camera is opened and an optical sensor of the camera is exposed to the return optical signal. Outside of the shutter disablement time period, the shutter of the camera which receives the received optical signal has its shutter enabled, *i.e.,* closed, so that the optical sensor is not exposed to any return optical signal.

Optionally, each optical receiver is optically coupled to a unique camera. There are N cameras for N optical receivers. Thus, the shutter of such camera is only disabled about the time when a return optical signal received by the optical receiver will be incident upon the camera. Optionally and alternatively, each optical receiver is optically coupled to a same camera, *e.g*., through the optical signal combiner 108-1. There is one camera for N optical receivers. Thus, the shutter of the only one camera is only disabled about the time when each return optical signal will be incident upon the camera.

After a third time period D3, a time subsequent portion of the pulsed optical signal 101-1 is emitted to another optical emitter. The third time period D3 is equal to or greater than zero seconds, and may vary between different time adjacent pairs of portions of the pulsed optical signal 101-1. The foregoing process is repeated at least once for each of the N output ports P1, P2, P3, PN, and thus for each of the N optical emitters 104-1, 104-2, 104-3, 104-N and N optical receivers 105-1, 105-2, 105-3, 105-N.

The N time segmented portions and shutter disablement periods are performed during a fourth time period D4. The N time segmented portions and shutter disablement periods may be performed one or more times respectively over one or more fourth time periods.

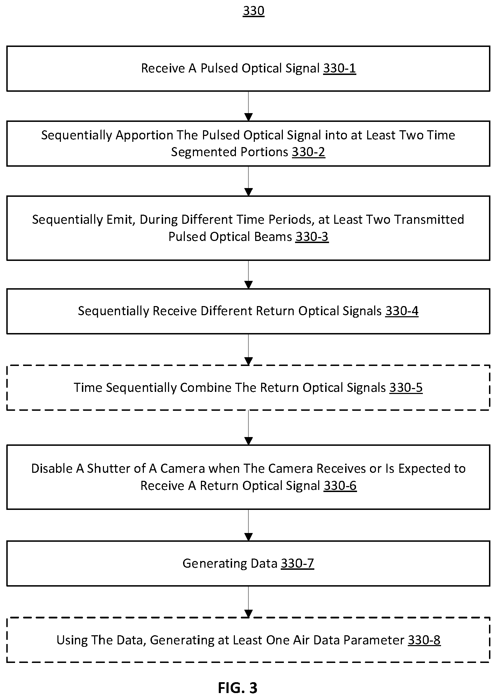

FIG. 3 illustrates a flow diagram of an exemplary method 330 for determining enhancing the signal to noise ratio of an optical air data system. Method 330 is illustrated for pedagogical purposes with a pulsed optical signal. However, the same techniques may be used for a continuous wave optical signal.

Exemplary method 330 may be implemented by one or more of the apparatuses illustrated in FIGS. 1A-2B. To the extent the methods herein are described herein as being implemented with one or more of the apparatuses illustrated in FIGS. 1A-2B, it is to be understood that other embodiments can be implemented in other ways. Techniques described with respect to the embodiments illustrated by FIGS. 1A-2B may be applicable to the method 330.

The blocks of the flow diagrams herein have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner). Optionally, the following blocks are performed during the fourth time period.

In block 330-1, a pulsed optical signal including a train of pulses is received, *e.g.,* from a laser. In block 330-2, the pulsed optical signal is sequentially time apportioned, *e.g*., by the first optical switch, into at least two time segmented portions. Each portion includes at least one pulse.

In block 330-3, at least two transmitted pulsed optical beams are sequentially emitted. Each transmitted pulsed optical beam is derived from a unique time segmented portion of the pulsed optical signal and is emitted during a different time period.

In block 330-4, different return optical signals are received sequentially at different times. Each return optical signal is derived from a unique transmitted pulsed optical beam as described elsewhere herein. For each transmitted pulsed optical beam and a return optical signal derived therefrom, either a transmitted pulsed optical beam is emitted, or the return optical signal derived therefrom is received, along a unique line of sight to a unique region of the atmosphere.

In optional block 330-5, time sequentially combine each return optical signal, *e.g.,* into a time sequentially combined return optical signal, *e.g.,* in the manner described elsewhere herein. In block 330-6, a shutter of each camera is disabled when the camera receives or is expected to receive a return optical signal, and only for a duration of actual or expected reception of the return optical signal. The shutter of the camera is disabled by electrically enabling the optical sensor of the camera so that the optical sensor senses the return optical signal, by modifying an optical transmission characteristic of the shutter to expose the optical sensor to the return optical signal, and/or by moving the shutter to expose the optical sensor to the return optical signal. As discussed elsewhere herein, the shutter of each camera is enabled at other times when the camera does not receive or is not expected to receive a return optical signal. Techniques for enabling and disabling a shutter of a camera are described elsewhere herein. Optionally, the time periods when a camera shutter is disabled may be equal to or longer than the time period of a return optical signal; this may be, at least partially, due to finite delay in transmitting a command signal to the camera to disable the shutter and uncertainty as to when such command signal is issued, *e.g*., by the optical and electronic processing system 108.

In block 330-7, for each return optical signal, data is generated by an optical sensor using the return optical signal. Optionally, such data is in an electrical signal, *e.g.,* an analog or a digital electrical signal, for example, representative of the intensity or power of each return optical signal incident on the optical sensor. In optional block 330-8, using the data derived from each return optical signal and data about the pulsed optical signal, at least one air data parameter is generated, *e.g*., by the optical processing system. Optionally, a velocity of an atmospheric region can be determined by calculating a Doppler shift of a carrier frequency of a transmitted optical beam and a carrier frequency of a return optical signal derived from the transmitted optical beam. Other air data parameters, *e.g*., temperature and humidity, can be determined by other techniques.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of" with respect to a listing of items such as, for example, A and B or A and/or B, means A alone, B alone, or A and B. The term "at least one of" is used to mean one or more of the listed items can be selected.

Terms of relative position as used in this application are defined based on a plane parallel to the conventional plane or working surface of a material (*e.g.*, a layer or a substrate), regardless of orientation. Terms such as "on," "higher," "lower," "over," "top," and "under" are defined with respect to the conventional plane or working surface being on the top surface of a layer or substrate, regardless of orientation. The terms "about" or "substantially" indicate that the value or parameter specified may be somewhat altered, as long as the alteration does not result in nonconformance of the process or structure to the illustrated embodiment. Finally, "exemplary" indicates the description is used as an example, rather than implying that it is an ideal. Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

The processor circuitry described herein may include one or more microprocessors, microcontrollers, analog to digital converters, digital signal processing (DSP) elements, application-specific integrated circuits (ASICs), and/or field programmable gate arrays (FPGAs). In this exemplary embodiment, processor circuitry includes or functions with software programs, firmware, or other computer readable instructions for carrying out various process tasks, calculations, and control functions, used in the methods described herein. These instructions are typically tangibly embodied on any storage media (or computer readable medium) used for storage of computer readable instructions or data structures.

The memory circuitry described herein can be implemented with any available storage media (or computer readable medium) that can be accessed by a general purpose or special purpose computer or processor, or any programmable logic device. Suitable computer readable medium may include storage or memory media such as semiconductor, magnetic, and/or optical media. For example, computer readable media may include conventional hard disks, solid state drives, Compact Disk - Read Only Memory (CD-ROM), DVDs, volatile or non-volatile media such as Random Access Memory (RAM) (including, but not limited to, Dynamic Random Access Memory (DRAM)), Read Only Memory (ROM), Electrically Erasable Programmable ROM (EEPROM), SD cards or micro SD cards and/or flash memory. Combinations of the above are also included within the scope of computer readable media.

Methods of the invention can be implemented in computer readable instructions, such as program modules or applications, which may be stored in the computer readable medium that is part of (optionally the memory circuitry) or communicatively coupled to the processing circuitry, and executed by the processing circuitry, optionally the processor circuitry. Generally, program modules or applications include routines, programs, objects, data components, data structures, algorithms, and the like, which perform particular tasks or implement particular abstract data types.

### Example Embodiments

Example 1 includes a method for improving a signal to noise ratio of an optical air data system, the method comprising: receiving a pulsed optical signal including a train of pulses; sequentially time apportioning the pulsed optical signal into at least two portions, wherein each portion includes at least one pulse; sequentially emitting at least two transmitted pulsed optical beam each of which is derived from a unique time segmented portion of the pulsed optical signal and each of which is emitted during a different time period; sequentially receiving a different return optical signal, wherein each return pulsed optical signal is derived from a unique transmitted pulsed optical beam, wherein, for each transmitted pulsed optical beam and a return optical signal derived therefrom, either a transmitted pulsed optical beam is emitted, or the return optical signal derived from the transmitted pulsed optical beam is received, along a unique line of sight to a unique region of atmosphere; receiving or expecting to receive an incident return optical signal at a camera, then disabling a shutter of the camera only for a duration of an actual or an expected reception of the incident return optical signal; and for each return optical signal, generating data with a camera's optical sensor from the incident return optical signal.

Example 2 includes the method of Example 1, further comprising: using the data and data about the pulsed optical signal, generating at least one air data parameter.

Example 3 includes the method of Example 2, wherein such data is in an electrical signal representative of an intensity or a power of each return optical signal incident on an optical sensor.

Example 4 includes the method of any of Examples 1-3, wherein the sequentially time apportioning of the pulsed optical signal into the at least two portions is performed by an optical switch.

Example 5 includes the method of any of Examples 1-4, wherein the shutter of the camera is disabled by electrically enabling the camera's optical sensor, by modifying an optical transmission characteristic of the shutter to expose the camera's optical sensor to the return optical signal, and/or by moving the shutter to expose the camera's optical sensor to the return optical signal.

Example 6 includes the method of any of Examples 1-5, further comprising, prior to generating the data, time sequentially combining each return optical signal.

Example 7 includes an optical air data system with improved signal to noise ratio, the optical air data system comprising: an optical and electronic processing circuit including at least one camera; a laser configured to emit a pulsed optical signal including a train of pulses; an optical switch coupled to the laser, and configured to receive the pulsed optical signal and to sequentially time apportion the pulsed optical signal into at least two portions, wherein each portion includes at least one pulse; at least two optical emitters configured to sequentially emit at least two transmitted pulsed optical beams each of which is derived from a unique portion of the pulsed optical signal and each of which is emitted during a different time period; at least two optical receivers each of which is optically coupled to the optical and electronic processing circuit and is configured to sequentially receive a return optical signal, wherein each return pulsed optical signal is derived from a unique transmitted pulsed optical beam; wherein the optical and electronic processing circuit is configured to disable a shutter of a camera when the camera receives or is expected to receive an incident return optical signal and only for a duration of an actual or an expected reception of the incident return optical signal; and wherein the optical and electronic processing circuit is further configured to, for each return optical signal, generate data with a camera's optical sensor from the incident return optical signal.

Example 8 includes the optical air data system of Example 7, wherein the optical and electronic processing circuit is further configured to, using the data generated by an optical sensor and data about the pulsed optical signal, generate at least one air data parameter.

Example 9 includes the optical air data system of Example 8, wherein such data generated by an optical sensor is in an electrical signal representative of an intensity or a power of each return optical signal incident on an optical sensor.

Example 10 includes the optical air data system of any of Examples 7-9, wherein the shutter of the camera is disabled by electrically enabling the camera's optical sensor, by modifying an optical transmission characteristic of the shutter to expose the camera's optical sensor to the return optical signal, and/or by moving the shutter to expose the camera's optical sensor to the return optical signal.

Example 11 includes the optical air data system of any of Examples 7-10, wherein the optical switch is a mechanical optical switch or a micro-optical-electro-mechanical switch.

Example 12 includes the optical air data system of any of Examples 7-11, wherein the optical and electronic processing circuit further comprises an optical combiner optically coupled between each optical receiver and the at least one camera, and configured to combine each return optical signal.

Example 13 includes the optical air data system of Example 12, wherein the optical combiner is an optical switch.

Example 14 includes the optical air data system of any of Examples 12-13, wherein the at least one camera consists of one camera.

Example 15 includes an apparatus, comprising: a vehicle; and an optical air data system mounted on and/or in the vehicle, and including: an optical and electronic processing circuit including at least one camera; a laser configured to emit a pulsed optical signal including a train of pulses; an optical switch coupled to the laser, and configured to receive the pulsed optical signal and to sequentially time apportion the pulsed optical signal into at least two portions, wherein each portion includes at least one pulse; at least two optical emitters configured to sequentially emit at least two transmitted pulsed optical beams each of which is derived from a unique portion of the pulsed optical signal and each of which is emitted during a different time period; at least two optical receivers each of which is optically coupled to the optical and electronic processing circuit and is configured to sequentially receive a return pulsed optical signal, wherein each return pulsed optical signal is derived from a unique transmitted pulsed optical beam; wherein the optical and electronic processing circuit is configured to disable a shutter of a camera when the camera receives or is expected to receive an incident return optical signal and only for a duration of an actual or an expected reception of the incident return optical signal; wherein the optical and electronic processing circuit is further configured to, for each return optical signal, generate data with a camera's optical sensor from the incident return optical signal; and wherein the optical and electronic processing circuit is further configured to, using the data generated by an optical sensor and data about the pulsed optical signal, generate at least one air data parameter.

Example 16 includes the apparatus of Example 15, wherein such data generated by an optical sensor is in an electrical signal representative of an intensity or a power of each return optical signal incident on an optical sensor.

Example 17 includes the apparatus of any of Examples 15-16, wherein the shutter of the camera is disabled by electrically enabling the optical sensor of the camera, by modifying an optical transmission characteristic of the shutter to expose the optical sensor to the return optical signal, and/or by moving the shutter to expose the optical sensor to the return optical signal.

Example 18 includes the apparatus of any of Examples 15-17, wherein the optical switch is a mechanical optical switch or a micro-optical-electro-mechanical switch.

Example 19 includes the apparatus of any of Examples 15-18, wherein the optical and electronic processing circuit further comprises an optical combiner optically coupled between each optical receiver and the at least one camera, and configured to combine each return optical signal.

Example 20 includes the apparatus of Example 19, wherein the at least one camera consists of one camera.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method for improving a signal to noise ratio of an optical air data system, the method comprising:
receiving a pulsed optical signal including a train of pulses;
sequentially time apportioning the pulsed optical signal into at least two portions, wherein each portion includes at least one pulse;
sequentially emitting at least two transmitted pulsed optical beam each of which is derived from a unique time segmented portion of the pulsed optical signal and each of which is emitted during a different time period;
sequentially receiving a different return optical signal, wherein each return pulsed optical signal is derived from a unique transmitted pulsed optical beam, wherein, for each transmitted pulsed optical beam and a return optical signal derived therefrom, either a transmitted pulsed optical beam is emitted, or the return optical signal derived from the transmitted pulsed optical beam is received, along a unique line of sight to a unique region of atmosphere;
receiving or expecting to receive an incident return optical signal at a camera, then disabling a shutter of the camera only for a duration of an actual or an expected reception of the incident return optical signal; and
for each return optical signal, generating data with a camera's optical sensor from the incident return optical signal.

2. The method of claim 1, further comprising:
using the data and data about the pulsed optical signal, generating at least one air data parameter.

3. The method of claim 1, wherein the sequentially time apportioning of the pulsed optical signal into the at least two portions is performed by an optical switch.

4. The method of claim 1, wherein the shutter of the camera is disabled by electrically enabling the camera's optical sensor, by modifying an optical transmission characteristic of the shutter to expose the camera's optical sensor to the return optical signal, and/or by moving the shutter to expose the camera's optical sensor to the return optical signal.

5. The method of claim 1, further comprising, prior to generating the data, time sequentially combining each return optical signal.

6. An optical air data system with improved signal to noise ratio, the optical air data system comprising:
an optical and electronic processing circuit including at least one camera;
a laser configured to emit a pulsed optical signal including a train of pulses;
an optical switch coupled to the laser, and configured to receive the pulsed optical signal and to sequentially time apportion the pulsed optical signal into at least two portions, wherein each portion includes at least one pulse;
at least two optical emitters configured to sequentially emit at least two transmitted pulsed optical beams each of which is derived from a unique portion of the pulsed optical signal and each of which is emitted during a different time period;
at least two optical receivers each of which is optically coupled to the optical and electronic processing circuit and is configured to sequentially receive a return optical signal, wherein each return pulsed optical signal is derived from a unique transmitted pulsed optical beam;
wherein the optical and electronic processing circuit is configured to disable a shutter of a camera when the camera receives or is expected to receive an incident return optical signal and only for a duration of an actual or an expected reception of the incident return optical signal; and
wherein the optical and electronic processing circuit is further configured to, for each return optical signal, generate data with a camera's optical sensor from the incident return optical signal.

7. The optical air data system of claim 6, wherein the optical and electronic processing circuit is further configured to, using the data generated by an optical sensor and data about the pulsed optical signal, generate at least one air data parameter.

8. The optical air data system of claim 6, wherein the shutter of the camera is disabled by electrically enabling the camera's optical sensor, by modifying an optical transmission characteristic of the shutter to expose the camera's optical sensor to the return optical signal, and/or by moving the shutter to expose the camera's optical sensor to the return optical signal.

9. The optical air data system of claim 6, wherein the optical switch is a mechanical optical switch or a micro-optical-electro-mechanical switch.

10. The optical air data system of claim 6, wherein the optical and electronic processing circuit further comprises an optical combiner optically coupled between each optical receiver and the at least one camera, and configured to combine each return optical signal.
